# EUROPÄISCHE PATENTANMELDUNG

(11) **EP 1 275 435 A1**
(43) Veröffentlichungstag der Anmeldung: **15.01.2003**
(21) Anmeldenummer: 01122111.6
(22) Anmeldetag: 14.09.2001
(51) Int. Cl.: B01J 19/32, F28F 25/08, F25J 3/02

(54) **Geordnete Packung für den Stoff- und Wärmeaustausch**

(30) Priorität: 14.07.2001 DE 10134312
(71) Anmelder: Linde Aktiengesellschaft, 65189 Wiesbaden (DE)
(72) Erfinder: Ferstl, Johann, Dr., 80995 München (DE); Moll, Anton, 82399 Raisting (DE)
(74) Vertreter: Gellner, Bernd, Dr.

(57) **Zusammenfassung**

Die Erfindung betrifft eine geordnete Packung mit mehreren parallel zueinander angeordneten Packungsblechen, wobei die Packung einen oberen und / oder einen unteren Randbereich sowie einen dazwischen liegenden Hauptbereich aufweist, welcher eine schräg verlaufende Wellung äufweist, wobei sich die Wellungen benachbarter Packungsbleche kreuzen. Zumindest ein Teil der Packungsbleche (10) weist in dem unteren und / oder dem oberen Randbereich (1, 2) in Richtung der unteren beziehungsweise oberen Packungsblechkante (7) abwechselnd erste (5) und zweite Zonen (6) auf. In den ersten Zonen (5) setzt sich die Wellung (4) aus dem Hauptbereich (3) unverändert in den Randbereich (1, 2) fort. Der hydraulische Widerstand der Packung in den zweiten Zonen (6) ist geringer als in dem Hauptbereich (3).

## Beschreibung

Die Erfindung betrifft eine geordnete Packung mit mehreren parallel zueinander angeordneten Packungsblechen, wobei die Packung einen oberen und/ oder einen unteren Randbereich sowie einen dazwischen liegenden Hauptbereich aufweist, welcher eine schräg verlaufende Wellung aufweist, wobei sich die Wellungen benachbarter Packungsbleche kreuzen.

In Trennkolonnen werden zum Stoff- und / oder Wärmeaustausch zweier Fluide häufig geordnete Packungen eingesetzt. Diese weisen mehrere senkrecht angeordnete Packungsbleche auf, die eine schräg von oben nach unten verlaufende Wellung besitzen. Unter Wellung wird im folgenden jegliche dem Packungsblech aufgeprägte Struktur verstanden, die für eine Flüssigkeit, die auf die Packung aufgegeben wird, Strömungskanäle bildet. Derartige Strömungskanäle können durch Falten, Knicken, Biegen oder sonstige Strukturierung der Bleche erzeugt werden. Die einzelnen Packungsbleche werden innerhalb der Packung so nebeneinander angeordnet, dass sich die schräg verlaufenden Strömungskanäle benachbarter Packungsbleche kreuzen.

Es ist bekannt, dass sich der Durchsatz von solchen geordneten Packungen durch eine Verbesserung der Flüssigkeitsdrainage im Bereich der Packungsblechunterkanten deutlich erhöhen lässt.

Werden mehrere Packungen übereinander angeordnet, so werden diese, um die Flüssigkeit gleichmäßiger in der Kolonne zu verteilen, in der Regel so orientiert, dass deren Strömungskanäle jeweils um 90° gegeneinander gedreht sind. Dies hat jedoch den Nachteil, dass der Strömungswiderstand für das durch die Packung strömende Gas an der Stoßstelle zweier übereinander angeordneter Packungen besonders hoch wird, da das aus der unteren Packung nach oben strömende Gas seine Richtung um 90° ändern muss, um in die Strömungskanäle der oberen Packung zu gelangen.

Gleichzeitig ist der hydraulische Querschnitt an der Stoßstelle deutlich reduziert. Durch die Wechselwirkung mit der nach unten ablaufenden Flüssigkeit staut sich Flüssigkeit an der Unterkante der oberen Packung auf, die den hydraulischen Querschnitt verengt.

Es sind verschiedene Methoden bekannt, um diese Probleme zu verringem und die Kapazität einer geordneten Packung zu erhöhen. Beispielsweise kann dies gemäß der DE-OS 29 42 843 dadurch erreicht werden, dass die Blechunterkanten schräg angeschnitten werden oder die einzelnen Packungsbleche an der Packungsunterkante unterschiedlich weit hervorstehen. Dadurch wird die Flüssigkeit besser aus den Strömungskanälen herausgeführt und die Drainage verbessert.

Die Herstellung solcher Packungen erfordert jedoch relativ kompliziertes Verformwerkzeug. Zudem ist die Stabilität derartiger Packungen gegenüber Packungen ohne verbesserte Drainage reduziert.

Der hydraulische Querschnitt im unteren Randbereich der Packung kann außerdem dadurch verbessert werden, dass die spezifische Oberfläche der Packung in diesem Bereich verringert wird. Auf diese Weise verringert sich die Wechselwirkung zwischen der herablaufenden Flüssigkeit und dem aufsteigenden Gas und die Gefahr des Flüssigkeitsrückstaues wird gesenkt. Dies kann zum Beispiel durch Ausstanzungen an der Unterkante der Packungsbleche oder eine gezielte Lochung der Bleche in diesem Bereich erreicht werden. Auch eine geringere Wellungshöhe im unteren Randbereich der Packungsbleche oder eine Ausführung des unteren Randbereiches als ebene Platte wirkt in dieser Weise. Derartige Maßnahmen werden beispielsweise in der EP-A-0 707 885 beschrieben.

Bei diesen Verfahren bilden sich an der Stoßstelle zweier Packungen horizontale Gaskanäle zwischen benachbarten Packungsblechen. In den Gaskanälen ist zwar, wie gewünscht, der Strömungswiderstand in vertikaler Richtung wesentlich geringer als im Hauptbereich der Packungen, nachteilig ist aber, dass in diesen Gaskanälen der Strömungswiderstand in horizontaler Richtung ebenfalls gering ist.

Innerhalb der Trennkolonne weisen Packungen immer inhomogene Zonen auf, deren Strömungswiderstand in vertikaler Richtung von dem der idealen Packung abweicht. Solche inhomogenen Zonen entstehen beispielsweise an stimseitigen Stoßstellen zweier Packungen oder im Bereich des Randspaltes zwischen der Packung und der Kolonnenwand. Durch den abweichenden Strömungswiderstand in den inhomogenen Zonen entsteht ein Druckunterschied in der Packung, welcher eine Querströmung von Gas und Flüssigkeit hervorruft. Insbesondere bei höherer Belastung der Packung, d.h. bei höherem Gas- und Flüssigkeitsdurchsatz, zeigen das Gas und die Flüssigkeit daher die Tendenz, horizontal zu strömen. Die Querströmung führt zu einer Fehlverteilung des Gases und der Flüssigkeit in der Packung, welche wiederum die Wirksamkeit der Packung beträchtlich reduziert.

Aufgabe vorliegender Erfindung ist es daher, eine Packung der eingangs genannten Art so zu verbessern, dass die Kapazität erhöht wird, deren Anfälligkeit gegenüber Flüssigkeits- und Gasfehlverteilungen jedoch gering ist.

Diese Aufgabe wird erfindungsgemäß durch eine Packung der eingangs genannten Art gelöst, wobei zumindest ein Teil der Packungsbleche in dem unteren und / oder dem oberen Randbereich in Richtung der unteren beziehungsweise oberen Packungsblechkante erste und zweite Zonen aufweist, dass sich in den ersten Zonen die Wellung aus dem Hauptbereich unverändert in den Randbereich fortsetzt, und dass der hydraulische Widerstand der Packung in den zweiten Zonen geringer ist als in dem Hauptbereich.

Die Aufteilung der Packungsbleche in einen Hauptbereich und in Randbereiche soll lediglich klarstellen, dass sich die Strukturierung der Bleche in den verschiedenen Bereichen unterscheiden kann, bedeutet jedoch nicht, dass sich diese strukturell unterscheiden müssen. Die Größe dieser Bereiche kann variieren, wobei jedoch in-der Regel der Hauptbereich den größten Teil des Packungsbleches einnimmt. Ein Randbereich wird vorzugsweise durch höchstens 10%, bevorzugt höchstens 5 %, des Packungsbleches gebildet.

Die Aufteilung des Packungsbleches beziehungsweise der Packung in oberen Randbereich, Hauptbereich und unteren Randbereich erfolgt in Bezug auf die Strömungsrichtung der Flüssigkeit durch die Packung unter dem Einfluss der Schwerkraft. Der obere Randbereich erstreckt sich somit entlang der Packungsblechkante, über die die Flüssigkeit in die durch die Bleche gebildeten Strömungskanäle eintritt, und der untere Randbereich entsprechend entlang der Blechkante, über die die Flüssigkeit die Strömungskanäle wieder verlässt.

Erfindungsgemäß wird der Randbereich in bestimmten Zonen, im Rahmen dieser Anmeldung als zweite Zonen bezeichnet, zur Erhöhung des hydraulischen Querschnitts umgeformt, während sich in den übrigen ersten Zonen die Wellung aus dem Hauptbereich des Packungsbleches unverändert in den Randbereich fortsetzt. Dadurch treten keine durchgehenden Kanäle in horizontaler Richtung auf. Die oben beschriebene durch solche horizontalen Kanäle hervorgerufene Maldistribution von Flüssigkeit und Gas wird wirkungsvoll verhindert.

Andererseits wird durch die Verformung oder Umgestaltung der Packungsbleche in den zweiten Zonen der hydraulische Querschnitt vergrößert und die Drainagewirkung verbessert. Der Strömungswiderstand an der Stoßstelle zweier übereinander angeordneter Packungen wird deutlich gesenkt, ein Aufstauen von Flüssigkeit in diesem Bereich vermieden.

Vorzugsweise weisen die Packungsbleche in den zweiten Zonen Einschnitte oder Öffnungen auf. Auf diese Weise wird die Drainage der Flüssigkeit verbessert und die Kapazität der Packung erhöht.

Gemäß einer weiteren vorteilhaften Variante besitzen die zweiten Zonen keine Wellung oder eine von der Wellung im Hauptbereich abweichende Wellung. Vorzugsweise wird die geänderte Struktur in den zweiten Zonen durch Quetschung des Packungsbleches in diesen Bereichen erreicht. Ganz besonders bevorzugt erfolgt die Quetschung nachdem dem Packungsblech die für den Hauptbereich vorgesehene Wellung aufgeprägt wurde.

Es hat sich als besonders günstig erwiesen, wenn die spezifischen Oberflächen des Packungsbleches in den ersten und den zweiten Zonen im wesentlichen gleich sind. Dadurch wird die Drainagewirkung in den zweiten Zonen ohne Verlust an spezifischer Oberfläche erzielt. Mit spezifischer Oberfläche wird, wie üblich, das Verhältnis von Packungsoberfläche zu Packungsvolumen bezeichnet.

In einer bevorzugten Ausführungsform weisen die zweiten Zonen eine Wellung auf, deren Höhe geringer als die der Wellung in der ersten Zone ist. Nach dem Stapeln der Packungsbleche zur Packung berühren sich in den zweiten Zonen die Wellenberge benachbarter Bleche nicht, wodurch der Strömungsquerschnitt für das Gas in den zweiten Zonen erhöht wird. In den ersten Zonen stoßen dagegen je zwei Packungsbleche aneinander, wodurch die horizontalen Querkanäle entlang der Unteroder Oberkante der Packung unterbrochen werden.

Die Querströmung von Flüssigkeit und Gas im Randbereich der Packung wird besonders wirkungsvoll dadurch verhindert beziehungsweise verringert, dass eine erste Zone in Richtung der unteren beziehungsweise oberen Packungsblechkante zumindest einen Wellenberg und ein Wellental der Wellung des Hauptbereiches umfasst und besonders bevorzugt mindestens eine Wellenlänge der Weltung lang ist. Auf diese Weise ist sichergestellt, dass der Querströmungskanal nach dem Stapeln der Packungsbleche unterbrochen wird.

Die erfindungsgemäßen ersten und zweiten Zonen können sowohl im oberen als auch im unteren Randbereich eines Packungsbleches und auch in beiden Randbereichen vorgesehen werden. Die ersten und die zweiten Zonen sind in der Regel nicht genauso groß, sondern entsprechend den strömungstechnischen Anforderungen ausgebildet. Bei relativ steil verlaufenden Strömungskanälen, bei denen zwischen zwei übereinander angeordneten Packungen nur eine geringe Umlenkung des Gasstromes erforderlich ist, werden beispielsweise die zweiten Zonen, die zur Verbesserung des Strömungswiderstandes beitragen, kleiner ausfallen als bei schwächer geneigten Strömungskanälen, bei denen sich an der Stoßstelle zweier Packungen die Strömungsrichtung stark ändert.

Aus fertigungstechnischen Gründen ist es vorteilhaft, zunächst das gesamte Packungsblech mit der für den Hauptbereich vorgesehenen Wellung zu versehen und anschließend die Umformung der zweiten Zonen vorzunehmen. Die bisher zur Formung der gewellten Bleche eingesetzten Werkzeuge können somit weiter verwendet werden.

Für die Packungsfertigung ist es weiterhin vorteilhaft, wenn die Umformung der zweiten Zonen sowohl an den oberen als auch an den unteren Blechkanten vorgenommen wird. Durch einfaches Wenden eines jeden zweiten Bleches um die von oben nach unten verlaufende Blechlängsachse lassen sich so die Bleche zur gewünschten Packung stapeln. Die Wellenberge können dabei aufgrund des Wendens der Bleche nicht mehr in die darunterliegenden Wellentäler rutschen.

Es ist ebenso vorteilhaft, nur jedes zweite Packungsblech in einem Randbereich mit den erfindungsgemäßen ersten und zweiten Zonen zu versehen. Die jeweils dazwischen angeordneten Packungsbleche besitzen eine sich über deren gesamte Oberfläche erstreckende gleichmäßige Wellung.

Es hat sich als günstig erwiesen, die zweiten Zonen so auszubilden, dass die Höhe der Wellung in diesen Bereichen variiert. Besonders bevorzugt steigt die Höhe der Wellung ausgehend von Null oder einem sehr kleinen Wert an der Packungsblechkante allmählich bis zur Höhe der Wellung im Hauptbereich an. Bei einem linearen Anwachsen der Wellungshöhe ergibt sich somit in der stirnseitigen Draufsicht auf eine zweite Zone eines Packungsbleches ein V-förmiger Querschnitt.

Die Variation der Wellungshöhe in den zweiten Zonen kann beispielsweise dadurch erreicht werden, dass ein bereits durchgängig gewelltes Blech mit einem V-förmigen Quetschwerkzeug verformt wird.

Die Erfindung hat zahlreiche Vorteile gegenüber den bisher bekannten Lösungen. So ist die Wirksamkeit der Packung aufgrund der höheren spezifischen Oberfläche gesteigert und auch bei hohen Belastungen tritt kein durch Fehlverteilungen verursachter Abfall der Wirksamkeit auf. Die Kapazitätssteigerung gegenüber einer herkömmlichen Packung, bei der keine Maßnahmen zur Erhöhung des hydraulischen Querschnitts zwischen zwei Packungen getroffen werden, beträgt etwa 30%. Durch die erhöhte Wirksamkeit und die hohe Kapazität der Packung reduzieren sich die Investitionskosten einer Trenn- oder Wärmeübertragungsanlage beträchtlich.

Im Vergleich zu den bekannten Packungen, bei denen der gesamte Randbereich so umgeformt ist, dass die Drainagewirkung und der hydraulische Querschnitt erhöht werden, besitzt die erfindungsgemäße Packung eine deutlich größere Stabilität, da die erfindungsgemäße Packung eine größere Auflagefläche bietet.

Die Erfindung hat sich insbesondere in Rektifikationskolonnen von Tieftemperaturluftzerlegungsanlagen bewährt.

Die Erfindung sowie weitere Einzelheiten der Erfindung werden im Folgenden anhand von in den Zeichnungen dargestellten Ausführungsbeispielen näher erläutert. Hierbei zeigen:
- Figur 1: die Draufsicht auf ein erfindungsgemäßes Packungsblech,
- Figur 2: den Verlauf der Kante des Packungsbleches und
- Figur 3: die entsprechende stimseitige Ansicht.

Eine in der Tieftemperaturluftzerlegung zur Rektifikation eingesetzte geordnete Packung besteht aus mehreren Packungsblechen, wie sie in den Figuren schematisch dargestellt sind.

Das erfindungsgemäße Packungsblech besitzt einen oberen Randbereich 1, einen unteren Randbereich 2 und einen dazwischenliegenden Hauptbereich 3. Der Hauptbereich 3 ist mit einer schräg verlaufenden Wellung 4 versehen, die sich teilweise bis in die Randbereiche 1, 2 fortsetzt.

Die Randbereiche 1, 2 sind in erste Zonen 5 und zweite Zonen 6 unterteilt, die abwechselnd entlang der unteren und oberen Blechkanten 7 angeordnet sind. Die ersten Zonen 5 besitzen dieselbe Wellung 4 wie der Hauptbereich 3 des Packungsbleches. In den zweiten Zonen 6 ist die Wellung durch Quetschung verformt worden, so dass sich eine geänderte Wellung 8 mit geringerer Amplitude ergibt.

Aufgrund der geringeren Wellenhöhe ist der freie Strömungsquerschnitt für das Gas in den zweiten Zonen 6 erhöht. Die Umlenkung des Gases von einer Packung in die darüber oder darunterliegende Packung wird verbessert und der Druckverlust verringert. Zudem wird in diesen Zonen 6 die Drainage verbessert, so dass die Flüssigkeit leichter aus den durch die Wellung 4 gebildeten Strömungskanälen herausfließen kann.

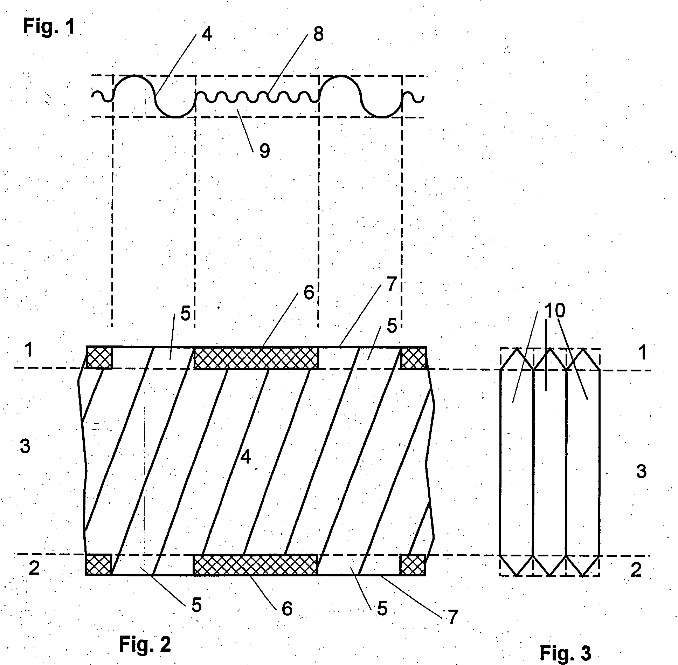

In Figur 2 ist zu sehen, dass die ersten Zonen 5 genau eine Wellenlänge der Wellung 4 lang sind, so dass nach dem Stapeln der Bleche die Wellenberge benachbarter Bleche jeweils aufeinandertreffen. Die in den zweiten Zonen 6 durch die geringere Wellenhöhe zwangsläufig entstehenden Querkanäle 9 werden so unterbrochen. Die Flüssigkeit und das Gas können daher nur innerhalb der zweiten Zonen 6 quer strömen. Fehlverteilungen von Flüssigkeit und Gas werden so wirkungsvoll verhindert.

Figur 3 zeigt die stimseitige Ansicht der erfindungsgemäßen Packung. Der Übersichtlichkeit halber sind lediglich drei Packungsbleche 10 dargestellt. Die Umformung der Wellung in den Zonen 6 erfolgt so, dass die Wellung an der Blechkante 7 den in Figur 2 gezeigten Verlauf besitzt und deren Höhe allmählich bis auf die Höhe der Wellung 4 im Hauptbereich 3 ansteigt. In der stirnseitigen Ansicht ergibt sich in den Zonen 6 ein im wesentlichen V-förmiges Auslaufen der Wellung. In den Zonen 5 erstreckt sich die Wellung 4 dagegen bis zur jeweiligen Blechkante 7, so dass sich im wesentlichen ein rechteckiger Querschnitt ergibt. Dies ist in Figur 3 durch die gestrichelte Linie angedeutet.

## Patentansprüche

1. Geordnete Packung mit mehreren parallel zueinander angeordneten Packungsblechen, wobei die Packung einen oberen und / oder einen unteren Randbereich sowie einen dazwischen liegenden Hauptbereich aufweist, welcher eine schräg verlaufende Wellung aufweist, wobei sich die Wellungen benachbarter Packungsbleche kreuzen, **dadurch gekennzeichnet, dass** zumindest ein Teil der Packungsbleche (10) in dem unteren und / oder dem oberen Randbereich (1, 2) in Richtung der unteren beziehungsweise oberen Packungsblechkante (7) abwechselnd erste (5) und zweite Zonen (6) aufweist, dass sich in den ersten Zonen (5) die Wellung (4) aus dem Hauptbereich (3) unverändert in den Randbereich (1, 2) fortsetzt und dass der hydraulische Widerstand der Packung in den zweiten Zonen (6) geringer als in dem Hauptbereich (3) ist.

2. Geordnete Packung nach Anspruch 1, **dadurch gekennzeichnet, dass** die Packungsbleche (10) in den zweiten Zonen (6) Einschnitte oder Öffnungen aufweisen.

3. Geordnete Packung nach Anspruch 1 oder 9, **dadurch gekennzeichnet, dass** die zweiten Zonen (6) keine Wellung oder eine von der Wellung (4) im Hauptbereich (3) abweichende Wellung (8) aufweisen.

4. Geordnete Packung nach einem der Ansprüche 1 bis 3, **dadurch gekennzeichnet, dass** die spezifische Oberfläche des Packungsbleches (10) in den ersten (5) und den zweiten Zonen (6) im wesentlichen gleich ist.

5. Geordnete Packung nach einem der Ansprüche 2 bis 4, **dadurch gekennzeichnet, dass** die Wellung (8) in der zweiten Zone (6) eine geringere Höhe als in der ersten Zone (5) besitzt.

6. Geordnete Packung nach einem der Ansprüche 1 bis 5, **dadurch gekennzeichnet, dass** eine erste Zone (5) in Richtung der Packungsblechkante (7) mindestens einen Wellenberg und ein Wellental der Wellung (4) des Hauptbereiches (3) umfasst.

7. Geordnete Packung nach einem der Ansprüche 1 bis 6, **dadurch gekennzeichnet, dass** nur jedes zweite Packungsblech (10) erste (5) und zweite Zonen (6) in einem Randbereich (1, 2) aufweist.

8. Geordnete Packung nach einem der Ansprüche 1 bis 7, **dadurch gekennzeichnet, dass** in den zweiten Zonen (6) die Höhe der Wellung (8) variiert.

9. Geordnete Packung nach Anspruch 8, **dadurch gekennzeichnet, dass** in den zweiten Zonen (6) die Höhe der Wellung (8) ausgehend von Null an der Packungsblechkante (7) allmählich bis zur Höhe der Wellung (4) im Hauptbereich (3) ansteigt.

10. Verwendung einer geordneten Packung nach einem der Ansprüche 1 bis 9 in einer Rektifikationskolonne einer Tieftemperaturluftzerlegungsanlage.
